# EUROPÄISCHE PATENTSCHRIFT

(11) **EP 2 948 678 B1**
(45) Veröffentlichungstag und Bekanntmachung des Hinweises auf die Patenterteilung: **14.03.2018**
(21) Anmeldenummer: 14703255.1
(22) Anmeldetag: 21.01.2014
(51) Int. Cl.: F03D 80/00

(54) **VERFAHREN ZUR AZIMUTVERSTELLUNG EINER WINDENERGIEANLAGE, AZIMUTVERSTELLSYSTEM UND WINDENERGIEANLAGE**
METHOD FOR ADJUSTING THE AZIMUTH OF A WIND ENERGY PLANT, AZIMUTH ADJUSTMENT SYSTEM AND WIND ENERGY PLANT
PROCÉDÉ DE RÉGLAGE AZIMUTAL D'UNE ÉOLIENNE, SYSTÈME DE RÉGLAGE AZIMUTAL ET ÉOLIENNE

(30) Priorität: 24.01.2013 DE 102013201162
(43) Veröffentlichungstag der Anmeldung: 02.12.2015
(73) Patentinhaber: Senvion GmbH, 22297 Hamburg (DE)
(72) Erfinder: HANSEN, Marco, 25774 Groven (DE)
(74) Vertreter: Wallinger Ricker Schlotter Tostmann
(86) Internationale Anmeldenummer: PCT/EP2014/000150
(87) Internationale Veröffentlichungsnummer: WO 2014/114445

(56) Entgegenhaltungen:
- DE-A1-102008 004 948

## Beschreibung

Die Erfindung betrifft ein Verfahren zur Azimutverstellung einer Windenergieanlage, bei dem während einer azimutalen Drehung eines Maschinenhauses mit einem Rotor auf einem Turm der Windenergieanlage wenigstens eine Azimutbremsvorrichtung mit einem konstanten Restdruck zur Erzeugung eines konstanten Resthaltemoments beaufschlagt wird. Die Erfindung betrifft weiter ein Azimutverstellsystem einer Windenergieanlage und eine Windenergieanlage.

Das Azimutverstellsystem einer Windenergieanlage hat die Aufgabe, im Betrieb einer Windenergieanlage bei Änderung der Windrichtung über ein vorbestimmbares Maß hinaus das Maschinenhaus mit dem Rotor auf dem Turm wieder in den Wind zu drehen, also seine Azimutposition bzw. den Azimutwinkel zu verstellen. Eine weitere Aufgabe ist es, die Azimutposition des Maschinenhauses bzw. der Gondel der Windenergieanlage zu verfahren, um die Kabel, die vom Maschinenhaus in den Turm führen, zu entdrillen, wenn das Maschinenhaus soweit in eine Richtung verfahren worden ist, dass eine maximal zulässige Verdrillung der Kabel stattgefunden hat. Schließlich kann der Azimutwinkel des Maschinenhauses mit dem Rotor auch verfahren werden, um eine vorbestimmte Position beispielsweise für Wartungsarbeiten bei stillstehender Windenergieanlage einzustellen, die beispielsweise für einen Helikopteranflug, insbesondere bei Offshore-Windenergieanlagen, gewünscht wird.

Um das Maschinenhaus bzw. die Gondel mit dem Rotor in seiner Azimutposition zu verstellen, weist die Windenergieanlage einen oder mehrere Azimutantriebe auf, die üblicherweise jeweils einen Motor oder zwei Motoren mit nachgeschaltetem Getriebe mit einem Zahnrad oder Zahnrädern aufweisen, der oder die in einen entsprechenden Zahnkranz am Turm eingreift bzw. eingreifen oder umgekehrt. Ferner weist das Azimutverstellsystem wenigstens eine Azimutbremsvorrichtung auf, beispielsweise mit Bremszangen, die an einer Bremsscheibe angreifen. Diese dienen dazu, nach beendeter Azimutverstellung das Maschinenhaus in der angefahrenen Azimutposition festzuhalten, so dass die Azimutverstellantriebe nicht mehr belastet werden.

Auch während eines Azimutverstellvorgangs haben die Azimutbremsvorrichtungen eine Aufgabe. Sie werden üblicherweise mit einem Restdruck beaufschlagt, um ein Resthaltemoment zu erzeugen. Dieses dient dazu, die Azimutantriebe von externen Störeinflüssen zu entkoppeln, die beispielsweise dadurch auftreten, dass Windböen am Rotor der Windenergieanlage angreifen und ein Azimutmoment auf das Maschinenhaus ausüben. Ohne das Resthaltemoment durch die Azimutbremsvorrichtungen würde das Azimutmoment direkt auf die Azimutantriebe geleitet werden, die dadurch in ihrer Funktion und ihrer Lebensdauer beeinträchtigt würden.

Aus DE 10 2008 004 948 A1 ist ein Verfahren zum Drehen eines Maschinenhauses einer Windenergieanlage durch Verfahren einer Azimutverstelleinrichtung bekannt, bei dem während des Verfahrens der Azimutverstelleinrichtung mittels einer Bremseinrichtung ein die Azimutverstelleinrichtung abbremsendes Resthaltemoment aufrecht erhalten wird. Dabei wird während des Verfahrens der Azimutverstelleinrichtung eine Drehzahl und/oder ein Drehmoment eines Azimutantriebs der Azimutverstelleinrichtung gemessen und bei einer Abweichung des gemessenen Parameters von einem Sollwert die Höhe des von der Bremseinrichtung ausgeübten Haltemoments so geregelt, dass der mindestens eine Betriebsparameter wieder dem Sollwert angeglichen wird. Auf diese Weise werden entstehende Drehzahlschwankungen des Azimutantriebs reduziert. Die Offenbarung von DE 10 2008 004 948 A1 sei vollinhaltlich durch Bezugnahme in der vorliegenden Patentanmeldung aufgenommen.

Das darin genannte Verfahren stellt eine Regelung dar, mit der die Motoren der Azimutverstelleinrichtung besonders konstant arbeiten, da Windeinflüsse, die die Azimutverstellung unterstützen bzw. erschweren, durch eine Erhöhung bzw. Verkleinerung des Resthaltemoments kompensiert werden. Nachteilig ist hierbei, dass die Messung sehr störanfällig ist, weil der Sensor versagen kann und die Regelgeschwindigkeit des Regelkreises, ausgehend von der gemessenen Motordrehzahl bzw. des Drehmoments der Azimutverstelleinrichtung über die Änderung des Resthaltemoments bis zu der damit einhergehenden Änderung der Drehzahl bzw. des Drehmoments des Azimutantriebs, hinderlich sein kann. Die entsprechenden Azimutantriebe müssen auch drehzahlgeregelt sein und die Controller-Steuerung sowie eine variable Druckbeaufschlagung für die Bremszangen der Azimutbremseinrichtung sind vergleichsweise aufwändig.

Demgegenüber liegt der vorliegenden Erfindung die Aufgabe zugrunde, ein Verfahren, ein Azimutverstellsystem und eine Windenergieanlage zur Verfügung zu stellen, bei denen auf kostengünstige Weise Azimutverstellungen mit hoher Betriebssicherheit und wenig Verschleiß von Azimutbremszangen oder Azimutbremsvorrichtungen realisiert werden.

Die der Erfindung zugrunde liegende Aufgabe wird durch ein Verfahren zur Azimutverstellung einer Windenergieanlage, bei dem während einer azimutalen Drehung eines Maschinenhauses mit einem Rotor auf einem Turm der Windenergieanlage wenigstens eine Azimutbremsvorrichtung mit einem konstanten Restdruck zur Erzeugung eines konstanten Resthaltemoments beaufschlagt wird, gelöst, das dadurch weitergebildet ist, dass der konstante Restdruck und/oder das konstante Resthaltemoment vor dem Beginn der azimutalen Drehung in Abhängigkeit von wenigstens einem Windgeschwindigkeitsparameter eingestellt wird.

Vorzugsweise wird der Restdruck und/oder das Resthaltemoment in Abhängigkeit des wenigstens einen Windgeschwindigkeitsparameters vor dem Beginn der azimutalen Drehung eingestellt. Somit wird bei Anforderung einer neuen Azimutsollposition zunächst das Resthaltemoment bzw. der Restdruck in Abhängigkeit der herrschenden Windgeschwindigkeit eingestellt, bevor der Verstellvorgang eingeleitet wird. Damit befindet sich der Restdruck bzw. das Resthaltemoment bereits im optimalen Bereich für die herrschende Windgeschwindigkeit und ist der Verschleiß der Azimutbremsvorrichtung so gering wie notwendig.

Erfindungsgemäß wird der Restdruck und/oder das Resthaltemoment während der azimutalen Drehung, insbesondere während der Zeit der Bestromung von Azimutantriebsmotoren, nicht verändert. Somit ist während der azimutalen Drehung der Restdruck ein konstanter Restdruck und das Resthaltemoment ein konstantes Resthaltemoment. Wenn keine azimutale Drehung erfolgt, ist der Restdruck bzw. das Resthaltemoment variabel einstellbar.

Im Unterschied zu dem Regelsystem gemäß DE 10 2008 004 948 A1 wird somit, insbesondere ausschließlich, ein Maß für die Windgeschwindigkeit benutzt, um den Restdruck und/oder das Resthaltemoment für den Verfahrvorgang einzustellen. Eine Regelung mit Regelkreis findet nicht statt. Damit ist es möglich, bei niedrigem Wind ein geringes Resthaltemoment einzustellen und bei höheren Windgeschwindigkeiten ein entsprechend stärkeres Resthaltemoment bzw. Restdruck. So wird der Verschleiß der Azimutbremsvorrichtung vermindert, da bei niedriger Windgeschwindigkeit auch nur ein entsprechend geringes Resthaltemoment realisiert werden muss.

Das erfindungsgemäße Verfahren ist auch kostengünstig, da der Azimutantrieb nunmehr nicht mehr drehzahlgeregelt sein muss und die Kosten für einen zusätzlichen Sensor und die entsprechenden Wartungskosten entfallen. Die Controller-Steuerung kann deutlich einfacher als bisher ausgebildet sein.

Vorzugsweise beruht der wenigstens eine Windgeschwindigkeitsparameter auf einer Messung der Windgeschwindigkeit mit wenigstens einem Anemometer, auf einer Generatorleistung und/oder einem Blatteinstellwinkel von Rotorblättern eines Rotors der Windenergieanlage, wobei insbesondere ein Bildungsgesetz für den wenigstens einen Windgeschwindigkeitsparameter in Abhängigkeit eines aktuellen Betriebsmodus der Windenergieanlage definiert ist.. Der Windgeschwindigkeitsparameter ist somit ein echtes Maß für die Windgeschwindigkeit und kann beispielsweise eine Umrechnung der Messgröße in die Windgeschwindigkeit bedeuten. Der einfachste Fall einer Windgeschwindigkeitsmessung ist die direkte Messung mit einem Anemometer. Da Anemometer üblicherweise an dem Maschinenhaus angeordnet sind und somit in der Turbulenzzone des Rotors, sind diese Messungen allerdings störanfällig. Durch geeignete Mittelung beispielsweise kann hieraus allerdings ein sinnvolles Windgeschwindigkeitssignal entstehen. Bei stillstehender Windenergieanlage liegt auch nur das Signal des Anemometers vor, allerdings ist aufgrund des Stillstands des Rotors auch die Messung des Anemometers weniger verfälscht.

In vielen Windenergieanlagen sind die Generatorleistung und die Blatteinstellwinkel der Rotorblätter ein stabiles Maß für die herrschende Windgeschwindigkeit. Im Teillastbetrieb, bei dem die Rotorblätter noch nicht blattwinkelgesteuert werden, sondern einen festen Blatteinstellwinkel haben, ist die erzeugte Generatorleistung direkt von der Windgeschwindigkeit abhängig. Durch die Trägheit des Rotors findet hier bereits eine gewisse Mittelung statt. Im Volllastbereich wird durch eine Pitchregelung der Blatteinstellwinkel der Rotorblätter nachgeführt, um die Nennleistung beizubehalten. In diesem Fall ist der momentane Blatteinstellwinkel ein gutes Maß für die Windgeschwindigkeit. Auch in diesem Fall findet durch die Trägheit des Systems bereits eine gewisse Mittelung statt.

Es können in einer vorteilhaften Weiterbildung der Erfindung auch mehrere der genannten Messwerte, also Anemometermessung, Leistungsentnahme und/oder Blatteinstellwinkel in geeigneter Weise miteinander kombiniert werden, beispielsweise durch eine situationsabhängige Gewichtung.

Eine bevorzugte Ausführungsform der Erfindung sieht weiterhin vor, dass das Bildungsgesetz für den Windgeschwindigkeitsparameter in Abhängigkeit eines aktuellen Betriebsmodus der Windenergieanlage definiert ist. So wird in einem Fall, in dem die Windenergieanlage abgeregelt ist, aus Schallschutzgründen oder wegen einer Anfrage eines Netzbetreibers, gegebenenfalls bereits im Teillastbetrieb eine Blattwinkelsteuerung realisiert, so dass bereits im Teillastbereich die Windgeschwindigkeit aus der Kombination aus Generatorleistung und Blattwinkel zu ermitteln ist.

Es ist festgestellt worden, dass mit der, insbesondere ausschließlichen, Verwendung der Windgeschwindigkeit, gemessen über eines dieser vorgenannten Windgeschwindigkeitsmaße, wobei andere Windgeschwindigkeitsmaße aus dem Betrieb der Windenergieanlage ebenfalls verwendbar sind, eine sichere und verschleißarme Azimutverstellung realisiert wird. Eine Regelung der Azimutantriebe ist dabei nicht notwendig.

Vorzugsweise wird ein laufendes Mittel über den wenigstens einen Windgeschwindigkeitsparameter gebildet, aufgrund dessen der Restdruck und/oder das Resthaltemoment eingestellt wird, insbesondere über eine Dauer von 30 Sekunden oder 60 Sekunden. Das laufende Mittel bedeutet, dass über ein laufendes Zeitfenster fester Breite, beispielsweise 30 Sekunden oder 60 Sekunden, über die gemessene Windgeschwindigkeit gemittelt wird. Ältere Werte werden nicht mehr berücksichtigt. Hierdurch werden Einflüsse von Fehlmessungen sowie von kurzzeitigen Böen oder Windlöchern ausgemittelt, was die Steuerung der Azimutverstellung vereinfacht. Eine gleichwertige Wirkung kann auch über im Stand der Technik bekannte Filterverfahren oder Verzögerungsglieder, beispielsweise Pt2-Glieder, erreicht werden.

Vorzugsweise wird die azimutale Drehung angehalten und der Restdruck und/oder das Resthaltemoment angepasst, wenn der wenigstens eine Windgeschwindigkeitsparameter sich um einen vorgebbaren Wert, insbesondere für eine vorgebbare Dauer, ändert. Damit kann der Verschleiß weiter verringert werden, wenn die Windgeschwindigkeit nachlässt, oder die Betriebssicherheit erhöht werden, wenn die Windgeschwindigkeit steigt, indem der entsprechende Restdruck und/oder das Resthaltemoment daran angepasst wird. Die vorgebbaren Werte und/oder Zeiten sind an die Art und Weise angepasst, wie der Windgeschwindigkeitsparameter ermittelt wird, beispielsweise an die Mittelungsdauer.

Dabei wird vorzugsweise nach dem Anhalten der Restdruck und/oder das Resthaltemoment an den wenigstens einen geänderten Windgeschwindigkeitsparameter angepasst und die azimutale Drehung wieder aufgenommen. Damit ist eine besonders sichere Einstellung und Nachführung des Restdrucks und/oder des Resthaltemoments realisiert, da dies in diesem Fall nicht während des laufenden Azimutverstellvorgangs geschieht. Damit kann auch die Azimutbremsvorrichtung einfacher gehalten sein und muss nicht so ausgelegt sein, dass die auch eine dynamische Änderung während eines Azimutverstellvorgangs erlaubt.

In einer bevorzugten Ausführungsform ist vorgesehen, dass der Restdruck und/oder das Resthaltemoment auf der Grundlage einer Windrastertabelle mit zwei oder mehreren Stufen für den oder die Windgeschwindigkeitsparameter eingestellt wird. Die Stufen für die Windgeschwindigkeit können sich an den verschiedenen kritischen Punkten des Windgeschwindigkeitsprofils der Windenergieanlage orientieren, beispielsweise der Einschaltwindgeschwindigkeit, der Windgeschwindigkeit, bei der die Nennleistung erreicht wird, also der Übergang zwischen Teillastbetrieb und Volllastbetrieb sowie der Abschaltgeschwindigkeit. Als Beispiel kann eine entsprechende Windrastertabelle, die als Look-up-Tabelle ausgeführt sein kann, beispielsweise fünf verschiedene Windgeschwindigkeitsbereiche enthalten, beispielsweise von 0 bis 5 m/sek., von 5 bis 7,5 m/sek., von 7,5 m/sek. bis 10 m/sek., von 10 m/sek. bis 14 m/sek. und bei Windgeschwindigkeiten über 14 m/sek. In einem solchen Fall können die Stufengrenzen auch als die zuvor definierten vorgebbaren Werte für die Anpassung des Resthaltemoments bzw. Restdrucks dienen, so dass bei Überschreiten einer solchen Stufe der nächste Wert aus der Tabelle verwendet wird.

Der Restdruck und/oder das Resthaltemoment wird oder werden über eine Schaltung parallel geschalteter Hydraulikventile und/oder über Signalstufen in der Ansteuerung der Hydraulik eingestellt.

So ist beispielsweise die Verwendung parallel geschalteter Hydraulikventile für die stufenweise Erhöhung des Resthaltedrucks gut geeignet, ebenso wie alternativ oder zusätzlich dazu, die Signalstufen in der Ansteuerung der Hydraulik. Signalstufen können beispielsweise Stufen von 4 bis 20 mA eines Signalstroms oder 0 bis 10 V einer Signalspannung sein.

In einer vorteilhaften Weiterbildung wird das Resthaltemoment über die Ansteuerung unterschiedlich vieler Bremszangen mit Restdruck eingestellt. Dies bedeutet, dass das Resthaltemoment über eine Anzahl von mit Restdruck beaufschlagten Bremszangen eingestellt wird. So kann bei gleichem Restdruck über die Anzahl der Bremszangen, beispielsweise eine, zwei, drei, vier usw. Bremszangen, wiederum eine gestufte Einstellung des Resthaltemoments vorgenommen werden. Auch eine Kombination der Auswahl der Anzahl der Bremszangen bzw. Bremsvorrichtung und des Restdrucks kann verwendet werden, um das Resthaltemoment einzustellen. Resthaltemoment und Restdruck sind in diesem Fall unabhängig voneinander.

Die Einstellung des Restdrucks und/oder des Resthaltemoments in Abhängigkeit des wenigstens einen Windgeschwindigkeitsparameters erfolgt vorteilhafterweise, wenn der wenigstens eine Windgeschwindigkeitsparameter bestimmbar ist, wobei der Restdruck und/oder das Resthaltemoment auf einen, insbesondere vorgebbaren, maximalen Wert oder Sicherheitswert eingestellt wird, wenn kein Windgeschwindigkeitsparameter bestimmbar ist, insbesondere bei einem Vereisungszustand der Windenergieanlage. Damit wird der Fall aufgefangen, dass es nicht möglich ist, einen Windgeschwindigkeitsparameter zu bestimmen. Entsprechende Fälle sind der Ausfall eines Anemometers, beispielsweise durch mechanische Probleme oder durch Vereisung, oder der Stillstand der Windenergieanlage, so dass Leistung und Blattwinkel keinen Rückschluss auf die Windverhältnisse zulassen. So lange allerdings noch ein Windgeschwindigkeitsparameter sicher bestimmbar ist, wird das erfindungsgemäße Verfahren vorzugsweise mit windgeschwindigkeitsabhängigem Restdruck und/oder Resthaltemoment ausgeführt.

In einem solchen Fall sieht eine bevorzugte Weiterbildung der Erfindung vor, dass bei Betriebsparametern der Windenergieanlage, die auf einen Vereisungszustand der Windenergieanlage schließen lassen, der Restdruck und/oder das Resthaltemoment auf einen oder den maximalen Einstellwert eingestellt werden. Dies hat den Vorteil, dass einerseits bei Vereisung sowohl die Anemometer als auch die Generatorleistung zur Bildung eines falschen Windgeschwindigkeitsparameters führen können. Andererseits sind gerade bei Vereisung Rotorunwuchten und somit sehr große Belastungen im Azimutsystem zu erwarten. Insofern ermöglicht diese Weiterbildung auch unter Vereisungsbedingungen einen sicheren Weiterbetrieb der Windenergieanlage.

Die der Erfindung zugrunde liegende Aufgabe wird auch durch ein Azimutverstellsystem einer Windenergieanlage zur azimutalen Drehung eines Maschinenhauses mit einem Rotor auf einem Turm der Windenergieanlage, umfassend eine Azimutverstellvorrichtung, eine Azimutbremsvorrichtung und eine Steuervorrichtung, die eine Azimutsteuerung umfasst, wobei die Steuervorrichtung ausgebildet und eingerichtet ist, ein erfindungsgemäßes zuvor beschriebenes Verfahren auszuführen. Hierbei handelt es sich einerseits um eine Implementierung einer Azimutsteuersoftware oder -elektronik in die Steuervorrichtung der Windenergieanlage und andererseits um die geeignete Auswahl von Windmesseinrichtungen, also Anemometer, Generatorleistungsmessung und/oder Blatteinstellwinkelmessung und einer geeigneten Auswahl der Azimutverstellantriebe und Azimutbremsen.

Schließlich wird die der Erfindung zugrunde liegende Aufgabe auch durch eine Windenergieanlage mit einem azimutal drehbar auf einem Turm gelagerten Maschinenhaus mit einem Rotor mit einem erfindungsgemäßen zuvor beschriebenen Azimutverstellsystem gelöst.

Die zu den einzelnen Erfindungsgegenständen, also dem erfindungsgemäßen Verfahren, dem Azimutverstellsystem und der Windenergieanlage genannten Merkmale, Eigenschaften und Vorteile gelten ohne Einschränkungen auch für die aufeinander bezogenen anderen Erfindungsgegenstände.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Maschinenhauses einer Windenergieanlage,
- Fig. 2: eine schematische Darstellung eines Azimutverstellsystems und
- Fig. 3: eine schematische Darstellung des Ablaufs eines erfindungsgemäßen Verfahrens.

In den Zeichnungen sind jeweils gleiche oder gleichartige Elemente und/oder Teile mit denselben Bezugsziffern versehen, so dass von einer erneuten Vorstellung jeweils abgesehen wird.

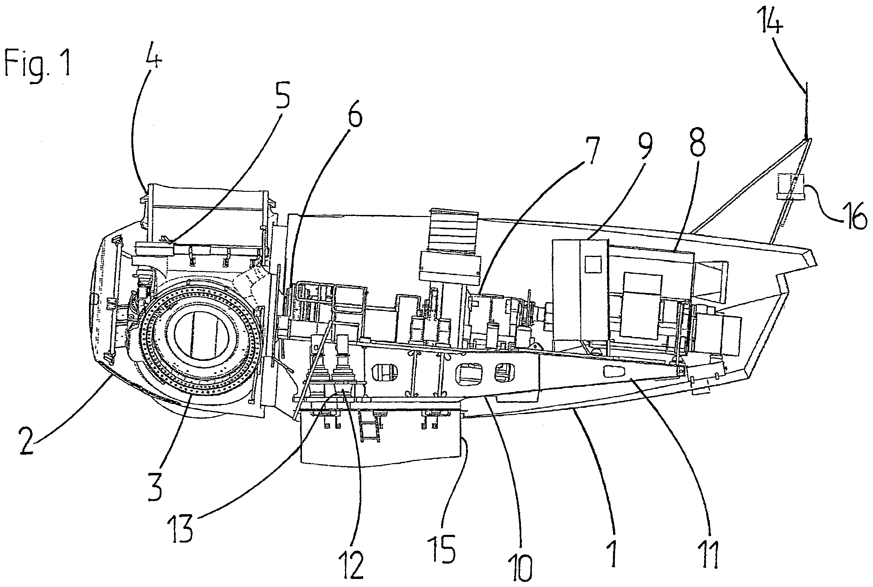

In Fig. 1 ist ein Maschinenhaus 1 bzw. eine Gondel einer Windenergieanlage schematisch von der Seite dargestellt. An das Maschinenhaus 1 schließt sich eine Rotornabe 2 mit drei Rotorblattanschlüssen 3 für Rotorblätter 4 an. Ein Rotorblatt 4 ist mit seinem blattwurzelseitigen Ende ebenfalls dargestellt. Die Rotorblattanschlüsse 3 weisen jeweils Flansche zum Anschluss eines Rotorblatts 4 und Blattwinkelverstellvorrichtungen zur Einstellung und Feststellung des Rotorblattwinkels auf. Ein Flansch ist mit dem Bezugszeichen 5 versehen.

Innerhalb des Maschinenhauses 1 schließt sich an die Rotornabe 2 eine Lagerung 6 einer langsamen Rotorwelle an, die direkt mit der Rotornabe 2 verbunden ist. Die langsame Welle ist mit einem Getriebe 7 verbunden, mit dem die Drehzahl der langsamen Rotorwelle heraufgesetzt und auf eine schnelle Welle übertragen wird. Die schnelle Welle, die sich an das Getriebe 7 anschließt, führt zu einem Generator 8, der am heckseitigen Ende der Gondel 1 angeordnet ist. Ebenfalls dargestellt ist eine elektronische Steuervorrichtung 9 mit einem Umrichter, der den durch den Generator 8 erzeugten elektrischen Strom so anpasst, dass er in ein privates oder öffentliches Stromnetz eingespeist werden kann.

Im unteren Bereich des Maschinenhauses 1 ist ein Maschinenträger mit einem Hauptträger 10 und einem Heckträger 11 dargestellt. Der Hauptträger 10 unterstützt die Lagerung 6 der langsamen Welle sowie die Rotornabe 2 und das Getriebe 7. Der Heckträger 11 trägt elektrische Komponenten wie den Generator 8, Steuerungs- und Schaltschränke sowie gegebenenfalls einen Transformator und den Umrichter. Zur azimutalen Drehung, das heißt zur Drehung des Maschinenhauses 1 auf der Längsachse des Turms 15, sind am Hauptträger 10 mehrere, üblicherweise zwischen vier und sechzehn Azimutantriebe 12 angeordnet, die über ein Zahnrad und Zahnkranzgetriebe das Maschinenhaus 1 auf dem Turm 15 drehen. Außerdem sind dazu benachbart Azimutbremsen 13 ausgebildet, die die Azimutantriebe 12 entlasten. Sie halten das Maschinenhaus 1 in einer festen azimutalen Position, sobald eine Azimutsollposition eingenommen ist. Während einer Azimutverstellung werden sie mit einem Restdruck beaufschlagt, um die Azimutantriebe 12 von äußeren Einflüssen zu entkoppeln.

Das Maschinenhaus 1 verfügt an seinem heckseitigen Ende außerdem über Windsensorik, beispielsweise ein Anemometer 16, und einen Blitzschutz 14. Ein weiterer, nicht dargestellter Blitzschutz ist üblicherweise im Bereich des Übergangs zwischen dem Maschinenhaus 1 und der Rotornabe 2 angeordnet, um Blitzeinschläge aus dem Rotorblatt 4 in den Turm 15 abzuleiten.

Der Hauptträger 10 ist aus einem Gusskörper hergestellt, der eine ausreichende Festigkeit zum Tragen der auf dem Hauptträger 10 ruhenden Komponenten aufweist und dessen vergleichsweise weiche Materialeigenschaften zu einer Dämpfung von Schwingungen, die während des Betriebs der Windenergieanlage fortwährend auftreten, gut geeignet ist. Insbesondere ist der Gussträger durch seine kerbfreie Geometrie besonders widerstandsfähig gegenüber Ermüdungsbelastungen, die aus dem Rotor in den Turm 15 übertragen werden müssen. Der Heckträger ist aus Stahlteilen geschweißt und nimmt die Gewichtskräfte und Drehmomente des Generators 8 sowie des Umrichters 9 auf und überträgt sie mittels einer Verbindung zwischen dem Hauptträger 10 und dem Heckträger 11 auf den Hauptträger 10 und den Turm 15. Der Heckträger 11 ist als einseitig eingespannter Kragarm ausreichend steif ausgeführt, um ein Einfedern des Generators 8 im Betrieb sicher zu vermeiden.

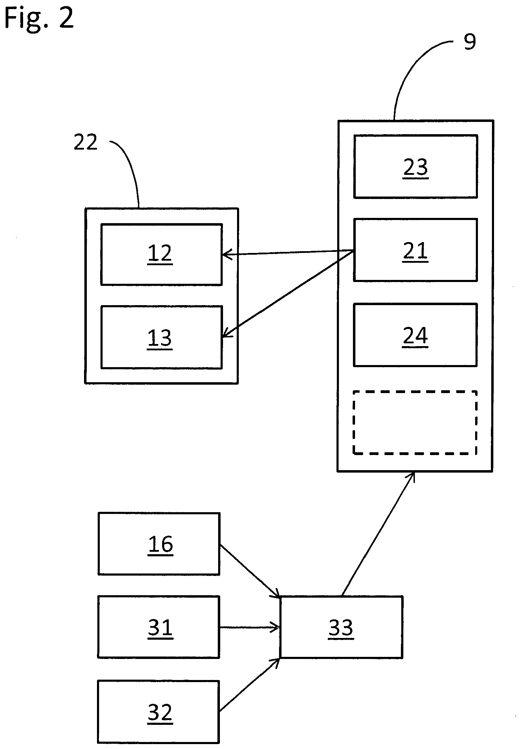

In Fig. 2 ist ein erfindungsgemäßes Azimutverstellsystem mit seinen einzelnen Teilen schematisch dargestellt. Kernstück ist die Steuerelektronik 9, die verschiedene Teile einer Windenergieanlagensteuerung ausführt, beispielsweise eine Pitchsteuerung 23, eine Azimutsteuerung 21, die Betriebsführung 24 und weitere Steuerungsaufgaben. Die Azimutsteuerung 21 in der Steuerelektronik 9 dient dazu, einen oder mehrere Azimutantriebe 12 sowie Azimutbremsen 13 einer Azimutverstellvorrichtung 22 anzusteuern und somit das Maschinenhaus 1 nach Anforderung mittels der Azimutantriebe 12 und Azimutbremsen 13 in eine Azimutsollposition zu verfahren. Nach Erreichen der Azimutsollposition wird der Azimutantrieb 12 ausgeschaltet und die Azimutbremse 13 festgestellt, um das Maschinenhaus 1 in der Azimutsollposition zu fixieren.

Bei dem erfindungsgemäßen Verfahren und dem erfindungsgemäßen Azimutverstellsystem erhält die Steuerelektronik 9 und die Azimutsteuerung 21 in der Steuerelektronik 9 die Eingabe eines Windgeschwindigkeitsparameters 33, anhand dessen der mit der bzw. den Azimutbremse(n) 13 auszuübende Restdruck und/oder Resthaltemoment auszuüben ist. Der wenigstens eine Windgeschwindigkeitsparameter 33 wird aus einer Messung einer Windgeschwindigkeit mit einem Anemometer 16, einer Generatorleistung 31 im Teillastbetrieb der Windenergieanlage und/oder einem Blatteinstellwinkel 32 im Volllastbetrieb der Windenergieanlage gebildet. Auch eine doppelte Messung, beispielsweise mittels Anemometer 16 und Generatorleistung 31 oder mittels Anemometer 16 und Blatteinstellwinkel 32 im Teillastbetrieb bzw. Volllastbetrieb ist möglich, um Redundanz zu schaffen oder einen modifizierten Windgeschwindigkeitsparameter 33 zu erstellen.

In einigen Betriebssituationen wird eine Windenergieanlage abgeregelt, beispielsweise auf Anforderung eines Netzbetreibers bei Überangebot an eingespeister Leistung, aus Schallschutzgründen oder aus anderen technischen Gründen, wie beispielsweise einem Überhitzungsschutz für den Generator oder die Leistungselektronik der Anlage. In solchen Situationen kann es auch schon im Teillastbereich erforderlich sein, neben der Leistung auch den Blattwinkel der Windenergieanlage zur Bildung des wenigstens einen Windgeschwindigkeitsparameters zu nutzen. Daher ist das Bildungsgesetz für den Windgeschwindigkeitsparameter vorzugsweise in Abhängigkeit des aktuellen Betriebsmodus der Windenergieanlage definiert.

Weiterhin ist vorgesehen, dass bei Betriebsparametern der Windenergieanlage, die auf einen Vereisungszustand der Windenergieanlage schließen lassen, der Restdruck und/oder das Resthaltemoment auf einen oder den maximalen Einstellwert eingestellt werden. Dies hat den Vorteil, dass einerseits bei Vereisung sowohl die Anemometer als auch die Generatorleistung zur Bildung eines falschen Windgeschwindigkeitsparameters führen können. Andererseits sind gerade bei Vereisung Rotorunwuchten und somit sehr große Belastungen im Azimutsystem zu erwarten. Insofern ermöglicht diese Weiterbildung auch unter Vereisungsbedingungen einen sicheren Weiterbetrieb der Windenergieanlage.

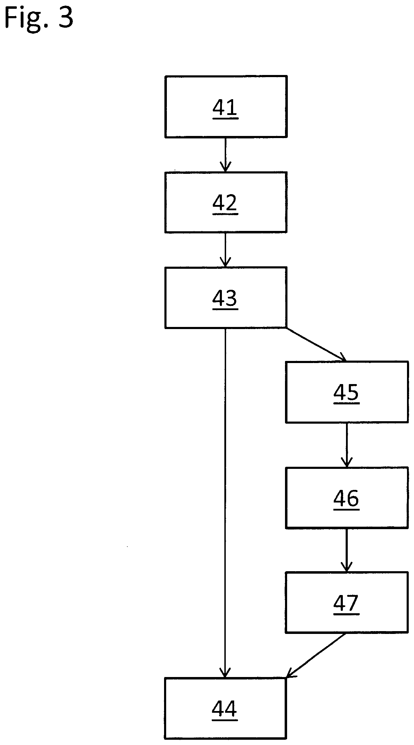

In Fig. 3 ist ein schematischer erfindungsgemäßer Verfahrensablauf dargestellt. Beispielsweise bei der Anforderung einer Wartungsposition oder nach Änderung einer Windrichtung wird im Verfahrensschritt 41 ein neuer Azimutwinkel bzw. Azimutsollwinkel angefordert. Die Azimutsteuerung 21 bestimmt dann aus dem vorliegenden Windgeschwindigkeitsparameter 33 den einzustellenden Restdruck und/oder das einzustellende Resthaltemoment und stellt diesen im Verfahrensschritt 42 an der Azimutbremse bzw. den Azimutbremsen 13 ein.

Im anschließenden Verfahrensschritt 43 wird dann die Azimutverstellung durch Ansteuerung und Aktivierung des Azimutantriebs 12 aufgenommen.

Während des Verfahrvorgangs wird der Windgeschwindigkeitsparameter 33 laufend weiter ermittelt. Ändert sich der Windgeschwindigkeitsparameter 33 während des Verstellvorgangs so wenig, dass eine Neueinstellung oder Änderung des Restdrucks und/oder des Resthaltemoments nicht notwendig ist, so wird direkt und ohne Unterbrechung der Verfahrensschritt 44 erreicht, bei dem die Azimutsollposition erreicht wurde und die Azimutverstellung beendet wird.

Falls sich während des Verfahrvorgangs der Windgeschwindigkeitsparameter 33 für eine vorgebbare Zeitdauer und/oder über ein vorgebbares Maß hinaus ändert, so kann in einem Verfahrensschritt 45 der Verfahrvorgang gestoppt werden. Anschließend wird im Verfahrensschritt 46 der Restdruck und/oder das Resthaltemoment an die geänderte Windgeschwindigkeit angepasst und im Verfahrensschritt 47 der Verfahrvorgang der Azimutverstellung wieder aufgenommen. Tritt im weiteren Verfahrvorgang wiederum eine Änderung der Windgeschwindigkeit auf, können die Schritte 45 bis 47 entsprechend wiederholt werden, bis die Azimutsollposition im Verfahrensschritt 44 erreicht ist und die Azimutverstellung beendet wird.

Das erfindungsgemäße Verfahren ermöglicht einen geringeren Verschleiß an den Bremsbelägen bei gleichzeitig einfacherer Ausführungsform als in DE 10 2008 004 948 A1 beschrieben. Durch den geringeren Verschleiß ist auch eine geringere Abriebbildung realisiert, die in erster Linie für starke Geräuschentwicklung, beispielsweise Quietschen oder Brummen, verantwortlich ist. Auch beim Verfahren entstehen weniger Geräusche. Durch geringeres Gegenmoment werden auch die Azimutantriebe entlastet.

Die Verstellung bzw. Änderung des Resthaltemoments bzw. Restdrucks kann in Stufen erfolgen oder stufenlos.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Maschinenhaus
- 2: Rotornabe
- 3: Rotorblattanschluss
- 4: Rotorblatt
- 5: Flansch
- 6: Lagerung der langsamen Rotorwelle
- 7: Getriebe
- 8: Generator
- 9: Steuerelektronik mit Umrichter
- 10: Hauptträger
- 11: Heckträger
- 12: Azimutantrieb
- 13: Azimutbremse
- 14: Blitzschutz
- 15: Turm
- 16: Anemometer
- 21: Azimutsteuerung
- 22: Azimutverstellvorrichtung
- 23: Pitchsteuerung
- 24: Betriebssteuerung
- 31: Generatorleistung
- 32: Blatteinstellwinkel
- 33: Windgeschwindigkeitsparameter
- 41: Anforderung neuer Azimutwinkel
- 42: Einstellen eines Restdrucks
- 43: Beginn der Azimutverstellung
- 44: Erreichen der Azimutsollposition, Ende der Azimutverstellung
- 45: Stopp bei Änderung der Windgeschwindigkeit
- 46: Anpassung des Restdrucks
- 47: Wiederaufnahme der Azimutverstellung

## Patentansprüche

1. Verfahren zur Azimutverstellung einer Windenergieanlage, bei dem während einer azimutalen Drehung eines Maschinenhauses (1) mit einem Rotor (2, 3, 4) auf einem Turm (15) der Windenergieanlage wenigstens eine Azimutbremsvorrichtung (13) mit einem konstanten Restdruck zur Erzeugung eines konstanten Resthaltemoments beaufschlagt wird, **dadurch gekennzeichnet, dass** der konstante Restdruck und/oder das konstante Resthaltemoment vor dem Beginn der azimutalen Drehung in Abhängigkeit von wenigstens einem Windgeschwindigkeitsparameter (33) eingestellt wird und der Restdruck und/oder das Resthaltemoment während der azimutalen Drehung, insbesondere während der Zeit der Bestromung von Azimutantriebsmotoren, nicht verändert wird.

2. Verfahren nach Anspruch 1, **dadurch gekennzeichnet, dass** der wenigstens eine Windgeschwindigkeitsparameter (33) auf einer Messung der Windgeschwindigkeit mit wenigstens einem Anemometer (16), auf einer Generatorleistung (31) und/oder einem Blatteinstellwinkel (32) von Rotorblättern (4) eines Rotors (2, 3, 4) der Windenergieanlage beruht, wobei ein Bildungsgesetz für den wenigstens einen Windgeschwindigkeitsparameter (33) in Abhängigkeit eines aktuellen Betriebsmodus der Windenergieanlage definiert ist.

3. Verfahren nach Anspruch 1 oder 2, **dadurch gekennzeichnet, dass** ein laufendes Mittel über den wenigstens einen Windgeschwindigkeitsparameter (33) gebildet wird, aufgrund dessen der Restdruck und/oder das Resthaltemoment eingestellt wird, insbesondere über eine Dauer von 30 Sekunden oder 60 Sekunden.

4. Verfahren nach einem der Ansprüche 1 bis 3, **dadurch gekennzeichnet, dass** die azimutale Drehung angehalten wird und der Restdruck und/oder das Resthaltemoment angepasst wird, wenn der wenigstens eine Windgeschwindigkeitsparameter (33) sich um einen vorgebbaren Wert, insbesondere für eine vorgebbare Dauer, ändert.

5. Verfahren nach einem der Ansprüche 1 bis 4, **dadurch gekennzeichnet, dass** die azimutale Drehung angehalten wird, wenn der Windgeschwindigkeitsparameter (33) sich um einen vorgebbaren Wert und/oder eine vorgebbare Zeit lang ändert.

6. Verfahren nach Anspruch 5, **dadurch gekennzeichnet, dass** nach dem Anhalten der Restdruck und/oder das Resthaltemoment an den geänderten Windgeschwindigkeitsparameter (33) angepasst wird und die azimutale Drehung wieder aufgenommen wird.

7. Verfahren nach einem der Ansprüche 1 bis 6, **dadurch gekennzeichnet, dass** der Restdruck und/oder das Resthaltemoment auf der Grundlage einer Windrastertabelle mit zwei oder mehreren Stufen für den oder die Windgeschwindigkeitsparameter (33) eingestellt wird.

8. Verfahren nach einem der Ansprüche 1 bis 7, **dadurch gekennzeichnet, dass** der Restdruck und/oder das Resthaltemoment über eine Schaltung parallel geschalteter Hydraulikventile und/oder über Signalstufen in der Ansteuerung der Hydraulik eingestellt wird oder werden.

9. Verfahren nach einem der Ansprüche 1 bis 8, **dadurch gekennzeichnet, dass** das Resthaltemoment über eine Anzahl von mit Restdruck beaufschlagten Bremszangen eingestellt wird.

10. Verfahren nach einem der Ansprüche 1 bis 9, **dadurch gekennzeichnet, dass** die Einstellung des Restdrucks und/oder des Resthaltemoments in Abhängigkeit des wenigstens einen Windgeschwindigkeitsparameters (33) erfolgt, wenn der wenigstens eine Windgeschwindigkeitsparameter (33) bestimmbar ist, wobei der Restdruck und/oder das Resthaltemoment auf einen, insbesondere vorgebbaren, maximalen Wert oder Sicherheitswert eingestellt wird, wenn kein Windgeschwindigkeitsparameter bestimmbar ist, insbesondere bei einem Vereisungszustand der Windenergieanlage.

11. Azimutverstellsystem einer Windenergieanlage zur azimutalen Drehung eines Maschinenhauses (1) mit einem Rotor (2, 3, 4) auf einem Turm (15) der Windenergieanlage, umfassend eine Azimutverstellvorrichtung (12), eine Azimutbremsvorrichtung (13) und eine Steuervorrichtung (9), die eine Azimutsteuerung (21) umfasst, wobei die Steuervorrichtung (9) ausgebildet und eingerichtet ist, ein Verfahren nach einem der Ansprüche 1 bis 10 auszuführen.

12. Windenergieanlage mit einem azimutal drehbar auf einem Turm (15) gelagerten Maschinenhaus (1) mit einem Rotor (2, 3, 4), mit einem Azimutverstellsystem nach Anspruch 11.

## Claims

1. A method for adjusting the azimuth of a wind power plant, in which, during an azimuthal rotation of a machine housing (1) with a rotor (2, 3, 4) on a tower (15) of the wind power plant, a constant residual pressure for generating a constant residual holding torque is applied to at least one azimuth braking device (13), **characterized in that** the constant residual pressure and/or the constant residual holding torque are/is set as a function of at least one wind speed parameter (33) before the start of the azimuthal rotation, and the residual pressure and/or the residual holding torque are/is not changed during the azimuthal rotation, in particular during the time of energization of azimuth drive motors.

2. The method as claimed in claim 1, **characterized in that** the at least one wind speed parameter (33) is based on a measurement of the wind speed with at least one anemometer (16), on a generator power (31) and/or a blade pitch angle (32) of rotor blades (4) of a rotor (2, 3, 4) of the wind power plant, wherein a formation rule for the at least one wind speed parameter (33) is defined as a function of a current operating mode of the wind power plant.

3. The method as claimed in claim 1 or 2, **characterized in that** a running mean is formed over the at least one wind speed parameter (33), on the basis of which the residual pressure and/or the residual holding torque are/is set, in particular over a duration of 30 seconds or 60 seconds.

4. The method as claimed in one of claims 1 to 3, **characterized in that** the azimuthal rotation is stopped and the residual pressure and/or the residual holding torque are/is adapted if the at least one wind speed parameter (33) changes by a predefinable value, in particular for a predefinable duration.

5. The method as claimed in one of claims 1 to 4, **characterized in that** the azimuthal rotation is stopped if the wind speed parameter (33) changes by a predefinable value and/or for a predefinable time.

6. The method as claimed in claim 5, **characterized in that** after the stopping the residual pressure and/or the residual holding torque are/is adapted to the changed wind speed parameter (33), and the azimuthal rotation is resumed.

7. The method as claimed in one of claims 1 to 6, **characterized in that** the residual pressure and/or the residual holding torque are/is set on the basis of a wind raster table with two or more stages for the wind speed parameter or parameters (33).

8. The method as claimed in one of claims 1 to 7, **characterized in that** the residual pressure and/or the residual holding torque are/is set by means of a circuit of hydraulic valves which are connected in parallel and/or by means of signal stages during the actuation of the hydraulics.

9. The method as claimed in one of claims 1 to 8, **characterized in that** the residual holding torque is set by means of a number of brake calipers to which residual pressure is applied.

10. The method as claimed in one of claims 1 to 9, **characterized in that** the residual pressure and/or the residual holding torque are/is set as a function of the at least one wind speed parameter (33) if the at least one wind speed parameter (33) can be determined, wherein the residual pressure and/or the residual holding torque are/is set to an, in particular predefinable, maximum value or safety value if it is not possible to determine a wind speed parameter, in particular in the case of an iced-up state of the wind power plant.

11. An azimuth adjustment system for a wind power plant for the azimuthal rotation of a machine housing (1) with a rotor (2, 3, 4) on a tower (15) of the wind power plant, comprising an azimuth adjustment device (12), an azimuth braking device (13) and a control device (9) which comprises an azimuth control (21), wherein the control device (9) is designed and configured to carry out a method as claimed in one of claims 1 to 10.

12. A wind power plant having a machine housing (1) which is mounted in an azimuthally rotatable fashion on a tower (15) and has a rotor (2, 3, 4), with an azimuth adjustment system as claimed in claim 11.

## Revendications

1. Procédé de réglage d'azimut d'une éolienne, dans lequel une pression résiduelle constante destinée à générer un couple de maintien résiduel constant est appliquée à au moins un dispositif de freinage azimutal (13) pendant une rotation azimutale d'une nacelle (1) ayant un rotor (2, 3, 4) sur une tour (15) de l'éolienne, **caractérisé en ce que** la pression résiduelle constante et/ou le couple de maintien résiduel constant est réglé avant le début de la rotation azimutale en fonction d'au moins un paramètre de vitesse de vent (33), et la pression résiduelle et/ou le couple de maintien résiduel ne varie pas pendant la rotation azimutale, en particulier pendant la durée d'alimentation des moteurs d'entraînement en azimut.

2. Procédé selon la revendication 1, **caractérisé en ce que** ledit au moins un paramètre vitesse de vent (33) est basé sur une mesure de la vitesse de vent avec au moins un anémomètre (16), sur une puissance de générateur (31) et/ou sur un angle de réglage de pale (32) de pales de rotor (4) d'un rotor (2, 3, 4) de l'éolienne, une règle d'apprentissage pour ledit au moins un paramètre de vitesse de vent (33) étant définie en fonction d'un mode de fonctionnement actuel de l'éolienne.

3. Procédé selon la revendication 1 ou la revendication 2, **caractérisé en ce qu'**une moyenne mobile dudit au moins un paramètre de vitesse de vent (33) est mise en oeuvre, moyenne sur la base de laquelle la pression résiduelle et/ou le couple de maintien résiduel est réglé, en particulier sur une durée de 30 secondes ou de 60 secondes.

4. Procédé selon l'une des revendications 1 à 3, **caractérisé en ce que** la rotation azimutale est arrêtée et la pression résiduelle et/ou le couple de maintien résiduel est adapté lorsque ledit au moins un paramètre de vitesse de vent (33) varie d'une valeur pouvant être prédéfinie, en particulier pendant une durée pouvant être prédéfinie.

5. Procédé selon l'une des revendications 1 à 4, **caractérisé en ce que** la rotation azimutale est arrêtée lorsque le paramètre de vitesse de vent (33) varie d'une valeur pouvant être prédéfinie et/ou pendant une durée pouvant être prédéfinie.

6. Procédé selon la revendication 5, **caractérisé en ce qu'**après l'arrêt, la pression résiduelle et/ou le couple de maintien résiduel est adapté au paramètre de vitesse de vent (33) modifié et la rotation azimutale est rétablie.

7. Procédé selon l'une des revendications 1 à 6, **caractérisé en ce que** la pression résiduelle et/ou le couple de maintien résiduel est réglé sur la base d'un tableau matriciel du vent avec deux ou plusieurs niveaux pour le ou les paramètres de vitesse de vent (33).

8. Procédé selon l'une des revendications 1 à 7, **caractérisé en ce que** la pression résiduelle et/ou le couple de maintien résiduel est (sont) réglé(s) par l'intermédiaire d'un circuit de vannes hydrauliques raccordées en parallèle et/ou par l'intermédiaire d'étages de signaux pendant l'actionnement des vannes hydrauliques.

9. Procédé selon l'une des revendications 1 à 8, **caractérisé en ce que** le couple de maintien résiduel est réglé par un nombre d'étriers de frein auxquels la pression résiduelle est appliquée.

10. Procédé selon l'une des revendications 1 à 9, **caractérisé en ce que** le réglage de la pression résiduelle et/ou du couple de maintien résiduel s'effectue en fonction dudit au moins un paramètre de vitesse de vent (33) lorsque ledit au moins un paramètre de vitesse de vent (33) peut être déterminé, la pression résiduelle et/ou le couple de maintien résiduel étant réglé à une valeur maximale ou à une valeur de sécurité, en particulier pouvant être prédéfinie, lorsqu'aucun paramètre de vitesse de vent ne peut être déterminé, en particulier en cas de givrage de l'éolienne.

11. Système de réglage d'azimut d'une éolienne pour la rotation azimutale d'une nacelle (1) ayant un rotor (2, 3, 4) sur une tour (15) de l'éolienne, comportant un dispositif de réglage d'azimut (12), un dispositif de freinage azimutal (13) et un dispositif de commande (9) comprenant une commande d'azimut (21), le dispositif de commande (9) étant conçu et configuré pour mettre en oeuvre un procédé selon l'une des revendications 1 à 10.

12. Éolienne ayant une nacelle (1) qui est montée de manière à pouvoir tourner en azimut sur une tour (15) et qui a un rotor (2, 3, 4), comportant un système de réglage d'azimut selon la revendication 11.
